# FASCICULE DE BREVET EUROPEEN

(11) **EP 1 291 494 B1**
(45) Date de publication et mention de la délivrance du brevet: **30.03.2005**
(21) Numéro de dépôt: 02292031.8
(22) Date de dépôt: 13.08.2002
(51) Int. Cl.: F01D 11/02

(54) **Procédé de réalisation de léchettes de labyrinthe de pièces mobiles de turbomachines**
Verfahren zur Herstellung von Zungen einer Labyrinthdichtung für bewegliche Teile einer Turbine
Method for producing labyrinth seal tongues for movable parts in turbines

(30) Priorité: 11.09.2001 FR 0111737
(43) Date de publication de la demande: 12.03.2003
(73) Titulaire: SNECMA MOTEURS, 75015 Paris (FR)
(72) Inventeur: Gueldry, Gérard, 77240 Vert Saint-Denis (FR); Mons, Claude, 77176 Savigny-Le-Temple (FR)
(74) Mandataire: Joly, Jean-Jacques

(56) Documents cités:
- GB-A- 2 310 897
- US-A- 3 339 933
- US-A- 3 975 165
- US-A- 4 148 494
- US-A- 4 232 995
- US-A- 4 386 112
- US-A- 5 223 332

## Description

### Arrière-plan de l'invention

L'invention concerne la réalisation de léchettes de labyrinthe de pièces mobiles (rotatives) de turbomachines, en particulier de rotors de turbines à gaz de moteurs d'avion.

Dans de telles turbines à gaz, les jeux entre des extrémités radiales de pièces mobiles et des pièces fixes situées en regard doivent souvent être aussi réduits que possible afin de ne pas affecter le rendement. Il en est ainsi entre des sommets d'aubes mobiles et un anneau fixe qui les entoure, ainsi qu'entre la périphérie d'un rotor et les sommets d'aubes fixes situées autour du rotor. Afin de s'opposer au passage direct de gaz entre les sommets des aubes fixes et le rotor, il est connu aussi de former à la périphérie de ce dernier des parties annulaires en saillie, ou léchettes, qui, au moins pour certaines d'entre elles peuvent définir un parcours tortueux, ou labyrinthe.

L'étroitesse du jeu entre pièces fixes et pièces mobiles, ainsi que les variations dimensionnelles d'origine thermique font que les parties d'extrémité radiales des pièces mobiles peuvent entrer en contact avec les pièces fixes. Afin d'éviter que de tels contacts ou frottements soient dommageables, il est connu de revêtir les pièces fixes d'un matériau dit "abradable" ayant une dureté moindre que les parties d'extrémité radiales des pièces mobiles. Ainsi, en cas de contact, les parties d'extrémité des pièces mobiles pénètrent dans le matériau abradable par usure de celui-ci, et un jeu minimum peut être maintenu entre pièces fixes et pièces mobiles. Les matériaux abradables sont des matériaux à base métallique, par exemple à base nickel, cobalt ou fer, compatibles avec le matériau constitutif des pièces fixes. Le caractère abradable peut être obtenu en conférant une certaine porosité aux matériaux.

Le titane est un matériau de plus en plus couramment utilisé pour la réalisation de pièces mobiles, notamment de rotors, dans des turbines à gaz de moteurs d'avion. Les contacts à haute énergie entre des matériaux contenant du titane et les matériaux contenant par exemple du nickel conduisent à la formation d'eutectiques fragiles à bas point de fusion et à fort retrait de solidification, capables d'engendrer des amorces de fissures. Celles-ci peuvent se transformer, par propagation, en fissures de fatigue du métal capables d'aboutir à la destruction des pièces mobiles.

Pour cette raison, il est connu de munir les parties d'extrémité de pièces mobiles en titane ou alliage de titane d'un revêtement protecteur évitant un contact direct entre le titane et le matériau abradable des pièces fixes. Un tel revêtement protecteur est généralement de type céramique, présentant un caractère abrasif, typiquement de l'alumine. Le revêtement est réalisé sur les parties d'extrémité des pièces mobiles, notamment sur les léchettes de labyrinthes de rotors, par projection thermique au moyen d'un gaz porteur à grande vitesse, l'épaisseur du revêtement étant généralement limitée à 0,1 ou 0,2 mm. US 5,223,332 décrit un tel revêtement.

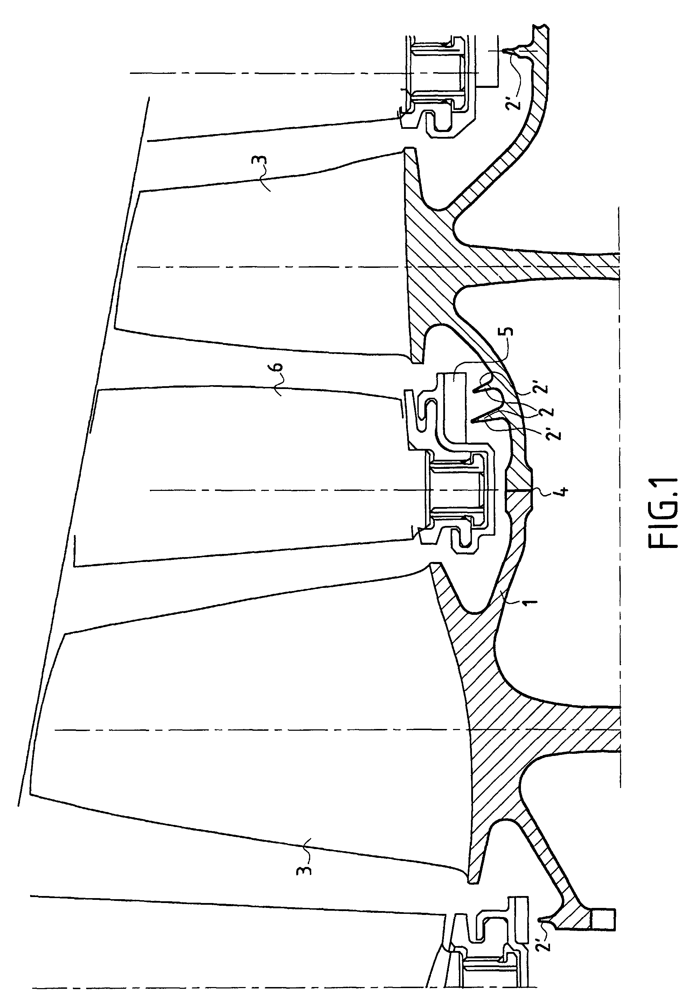

Dans le cas de rotors formés de sections soudées entre elles comme le rotor 1 de la figure 1, le revêtement des léchettes 2, 2', et notamment des léchettes de labyrinthe 2 doit être réalisé après montage du rotor afin d'éviter un endommagement du revêtement lors du soudage. Or, la forme des léchettes de labyrinthe 2 et leur emplacement entre les aubes mobiles 3, décalé par rapport au plan 4 de raccordement par soudage, font qu'il est très difficile, voire quasi impossible, de réaliser un revêtement totalement satisfaisant sur les deux flancs des léchettes, c'est-à-dire un revêtement garantissant l'absence de contact entre le titane du matériau constitutif du rotor 1 et le matériau abradable 5 dont est muni le sommet des aubes fixes 6, au regard des léchettes 2.

### Objet et résumé de l'invention

L'invention a pour objet de fournir un procédé de réalisation de léchettes de labyrinthe à la périphérie d'une pièce mobile en matériau métallique de turbomachine, en particulier mais non exclusivement de pièce réalisée essentiellement en titane ou en alliage de titane, qui ne présente pas les inconvénients de l'art antérieur évoqué plus haut, notamment qui permet d'éviter tout risque de contact avec formation d'eutectique entre le matériau métallique de la pièce mobile et un matériau abradable éventuel porté par une pièce fixe adjacente, et ce, quelle que soient la forme et l'emplacement des léchettes.

Ce but est atteint du fait que, avant montage de la pièce mobile, on forme sur celle-ci une couche ayant une épaisseur d'au moins 1 mm en un matériau réfractaire adhérant au matériau métallique, ledit matériau réfractaire contenant un mélange d'au moins un métal et d'au moins une céramique, et on usine les léchettes de la pièce mobile à leurs dimensions finales dans la couche épaisse de matériau réfractaire.

Le matériau réfractaire est choisi de manière à être compatible avec le matériau métallique de la pièce mobile, c'est-à-dire capable de s'ancrer sur le matériau métallique à la surface de celui-ci, et ayant un coefficient de dilatation thermique proche de celui du matériau métallique.

Le matériau réfractaire est bien entendu également choisi de manière à ne pas créer d'eutectiques dommageables par le contact à haute énergie avec un matériau abradable. De préférence, le matériau réfractaire ne comprend donc pas de titane.

En particulier, mais non exclusivement, lorsque le matériau métallique de la pièce mobile est essentiellement en titane ou alliage de titane, le matériau réfractaire comprend de préférence un métal tel que le fer, le nickel et le cobalt et une céramique choisie par exemple parmi les oxydes réfractaires, carbures, borures ou nitrures, notamment au moins une céramique ayant un caractère abrasif, typiquement l'alumine, les carbures de silicium ou de tungstène, ou les nitrures de bore.

La couche en matériau réfractaire a une épaisseur choisie pour permettre l'usinage dans cette épaisseur des léchettes de labyrinthe des pièces mobiles. L'épaisseur de la couche formée, avant usinage, est supérieure à 1 mm, typiquement comprise entre 3 et 8 mm.

La couche en matériau réfractaire est avantageusement sous forme de poudre agglomérée ou de mélange de poudres agglomérées. Elle peut être formée par projection thermique, notamment par dépôt au moyen d'un plasma, ou par brasage sur le matériau métallique.

L'invention concerne aussi une pièce mobile formant rotor de turbomachine ayant des léchettes de labyrinthe telles qu'elles peuvent être obtenues par le procédé défini ci-avant.

### Brève description des dessins

L'invention sera mieux comprise à la lecture de la description faite ci-après, à titre indicatif mais non limitatif, en référence aux dessins annexés, sur lesquels :
- la figure 1, déjà décrite, est une vue en demi-coupe partielle d'une section de turbomachine montrant un rotor muni de léchettes de labyrinthe selon l'art antérieur ;
- les figures 2A à 2C illustrent des étapes successives de réalisation de léchettes de labyrinthe d'une section de rotor de turbomachine, selon un mode de mise en oeuvre du procédé conforme à l'invention ; et
- la figure 3 illustre une variante de mise en oeuvre du procédé des figures 2A à 2C.

### Description détaillée de modes de réalisation de l'invention

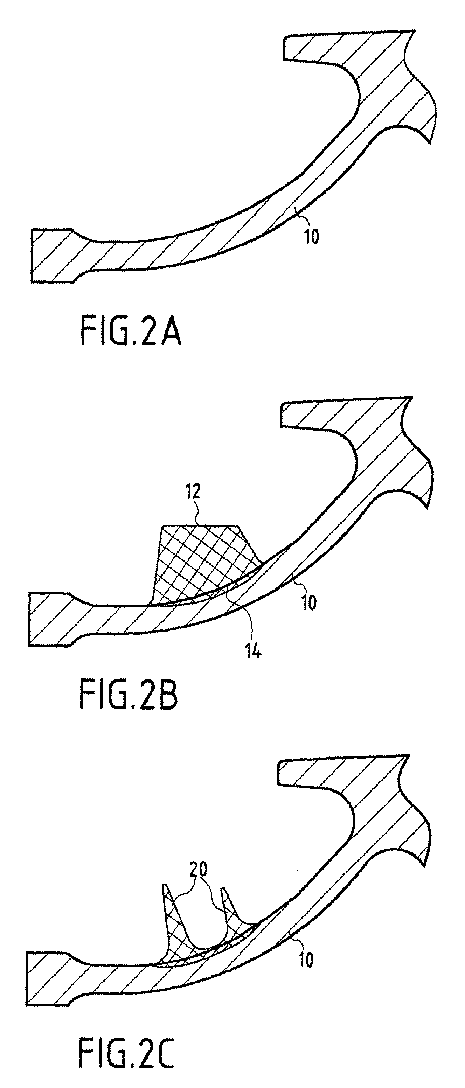

La figure 2A montre une partie de rotor 10 de turbomachine, notamment de turbine à gaz de moteur d'avion. Il s'agit par exemple d'une partie de section de rotor avant son soudage avec une ou plusieurs autres sections pour former un rotor soudé tel que le rotor 1 de la figure 1. La partie de rotor 10 est destinée à être disposée en regard d'un sommet d'aube fixe muni d'un revêtement abradable dans la section de compresseur haute pression de la turbomachine.

Le rotor 10 est en matériau métallique, par exemple essentiellement en titane ou en alliage de titane.

Comme le montre la figure 2B, une couche épaisse 12 en matériau réfractaire est formée sur la partie de rotor 10.

La couche 12 est en un matériau qui, d'une part, est compatible avec le matériau métallique du rotor 10 et, d'autre part, convient pour la réalisation de léchettes, par exemple de léchettes de labyrinthe susceptibles d'entrer en contact avec un matériau abradable porté par un sommet d'aube fixe situé en regard de la partie de rotor 10, après montage de celui-ci.

Ce matériau réfractaire comprend avantageusement un matériau de base métallique de préférence autre que le titane, tel que du fer, du cobalt, du nickel ou un alliage de ceux-ci, et au moins une céramique. La ou les céramiques sont choisies parmi les oxydes réfractaires, les carbures, les nitrures, les borures, de préférence afin de conférer un caractère abrasif au matériau. Un tel caractère abrasif peut être obtenu grâce à la présence d'alumine ou encore de carbures de silicium ou de tungstène.

Des compositions typiques de matériau réfractaire à base nickel, (en pourcentages en masse) ainsi que la dureté Rockwell C (HRc) sont données dans le tableau ci-après.

| Ni | Cr | C | B et Si | Fe | HRc |
|---|---|---|---|---|---|
| Base | 7 | 0.35 | 2 à 2.5 | 2.5 | 40 |
| Base | 12 | 0.55 | 2 à 2.5 | 2.5 | 50 |
| Base | 15 | 0.75 | 2 à 2.5 | 2.5 | 60 |

La couche 12 est formée par dépôt physique, avantageusement par projection thermique, à partir de poudres des différents constituants intimement mélangées. Des procédés connus de dépôt par plasma tels qu'à arc serré ou sous pression partielle conviennent à cet effet. Les poudres, ayant de préférence une granulométrie relativement faible, c'est-à-dire une taille moyenne de particules inférieure à 100 microns, sont entraînées par plasma gazeux jusqu'à la surface de la partie de rotor 10. Un mouvement relatif de rotation entre la partie de rotor 10 et le dispositif de dépôt permet de former une couche annulaire 12 sur toute la périphérie de la partie de rotor 10.

Comme le montre la référence 14 sur la figure 2B, le matériau réfractaire de la couche 12 diffuse localement dans le matériau métallique de la partie de rotor 10 assurant l'ancrage de la couche 12 avec forte adhérence.

Après dépôt de la couche 12, celle-ci est usinée afin de former des léchettes 20 ayant des dimensions précises au sein du matériau réfractaire (figure 2C). L'épaisseur du matériau réfractaire est ici choisie au moins égale et même légèrement supérieure à la hauteur des léchettes de sorte que celles-ci sont intégralement formées dans le matériau réfractaire. Ainsi, un contact éventuel en service entre le matériau métallique de la partie de rotor 10 et un matériau abradable situé en regard est exclu.

L'épaisseur de la couche 12 est donc de préférence comprise entre 2 mm et 8 mm, selon la taille souhaitée pour les léchettes. Typiquement, cette épaisseur peut être de 4 mm à 5 mm.

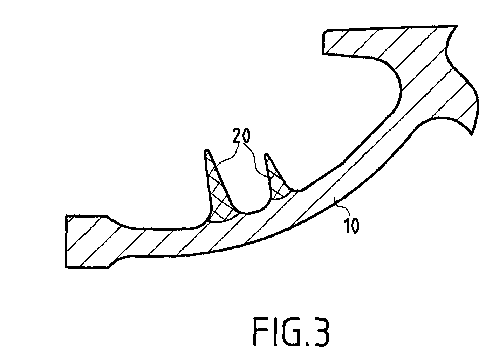

On notera que l'épaisseur de la couche de matériau réfractaire pourrait être un peu inférieure à la hauteur des léchettes 20, celles-ci restant toutefois réalisées en matériau réfractaire à partir de leur sommet et sur la plus grande partie de leur hauteur. Une telle disposition est montrée sur la figure 3.

Après usinage des léchettes 20, le montage du rotor peut être réalisé. Les léchettes étant réalisées intégralement (ou quasi intégralement) en matériau réfractaire, une éventuelle opération de soudage de la section de rotor qui les porte n'est pas susceptible d'entraîner leur endommagement, à la différence d'un revêtement mince.

## Revendications

1. Procédé de réalisation de léchettes de labyrinthe à la périphérie d'une pièce mobile en matériau métallique pour turbomachine, dans lequel, avant le montage de la pièce mobile, on forme sur celle-ci une couche en un matériau réfractaire adhérant au matériau métallique, ledit matériau réfractaire contenant un mélange d'au moins un métal et d'au moins une céramique, et on usine des léchettes de labyrinthe à leurs dimensions finales dans la couche épaisse de matériau réfractaire, **caractérisé en ce que** la couche a une épaisseur d'au moins 1 mm.

2. Procédé selon la revendication 1, **caractérisé en ce que** le matériau réfractaire de la couche comprend au moins un métal choisi parmi le fer, le cobalt et le nickel, et au moins une céramique.

3. Procédé selon la revendication 2, **caractérisé en ce que** la céramique est choisie parmi les oxydes réfractaires, les carbures, les nitrures et les borures.

4. Procédé selon la revendication 3, **caractérisé en ce que** le matériau réfractaire comprend de l'alumine.

5. Procédé selon l'une quelconque des revendications 1 à 4, **caractérisé en ce que** le matériau réfractaire de la couche est sous forme de poudre agglomérée ou mélange de poudres agglomérées.

6. Procédé selon l'une quelconque des revendications 1 à 5, **caractérisé en ce que** la couche de matériau réfractaire est formée par dépôt par projection thermique.

7. Procédé selon la revendication 6, **caractérisé en ce que** la couche de matériau réfractaire est formée par dépôt par plasma.

8. Procédé selon l'une quelconque des revendications 1 à 5, **caractérisé en ce que** la couche de matériau réfractaire est formée par brasage sur le matériau métallique.

9. Pièce mobile formant rotor de turbomachine en matériau métallique présentant des léchettes de labyrinthe à sa périphérie, les léchettes étant usinées dans l'épaisseur d'une couche en matériau réfractaire adhérant au matériau métallique, ledit matériau réfractaire contenant un mélange d'au moins un métal et d'au moins une céramique, **caractérisé en ce que** la couche a une épaisseur d'au moins 1 mm.

10. Pièce mobile selon la revendication 9, **caractérisée en ce que** le métal est choisi parmi le fer, le cobalt et le nickel.

11. Pièce mobile selon la revendication 9 ou 10, **caractérisée en ce que** la céramique est choisie parmi les oxydes réfractaires, les carbures, les nitrures et les borures.

12. Pièce mobile selon la revendication 11, **caractérisée en ce que** le matériau réfractaire comprend de l'alumine.

## Patentansprüche

1. Verfahren zur Herstellung von Labyrinthzungen am Umfang eines beweglichen Teils aus metallischem Werkstoff für eine Turbomaschine, bei dem vor der Montage des beweglichen Teils auf diesem eine Schicht aus an dem metallischen Werkstoff haftendem, feuerfestem Material gebildet wird, wobei das feuerfeste Material eine Mischung aus wenigstens einem Metall und aus wenigstens einer Keramik enthält, und in der dicken Schicht aus feuerfestem Material Labyrinthzungen auf ihre Endabmessungen bearbeitet werden, **dadurch gekennzeichnet, dass** die Schicht eine Dicke von wenigstens 1 mm aufweist.

2. Verfahren nach Anspruch 1, **dadurch gekennzeichnet, dass** das feuerfeste Material der Schicht wenigstens ein Metall ausgewählt aus Eisen, Kobalt und Nickel, sowie wenigstens eine Keramik enthält.

3. Verfahren nach Anspruch 2, **dadurch gekennzeichnet, dass** die Keramik ausgewählt ist aus feuerfesten Oxiden, Karbiden, Nitriden und Boriden.

4. Verfahren nach Anspruch 3, **dadurch gekennzeichnet, dass** das feuerfeste Material Aluminiumoxid enthält.

5. Verfahren nach irgendeinem der Ansprüche 1 bis 4, **dadurch gekennzeichnet, dass** das feuerfeste Material der Schicht in Form von agglomeriertem Pulver oder einer Mischung aus agglomerierten Pulvern vorliegt.

6. Verfahren nach irgendeinem der Ansprüche 1 bis 5, **dadurch gekennzeichnet, dass** die Schicht aus feuerfestem Material durch Abscheidung mittels thermischem Spritzen gebildet ist.

7. Verfahren nach Anspruch 6, **dadurch gekennzeichnet, dass** die Schicht aus feuerfestem Material durch Plasmaabscheidung gebildet ist.

8. Verfahren nach irgendeinem der Ansprüche 1 bis 5, **dadurch gekennzeichnet, dass** die Schicht aus feuerfestem Material durch Löten auf den metallischen Werkstoff gebildet ist.

9. Einen Turbomaschinenrotor bildendes bewegliches Teil aus metallischem Werkstoff, das an seinem Umfang Labyrinthzungen aufweist, wobei die Zungen in der Dicke einer Schicht aus an dem metallischen Werkstoff haftendem, feuerfestem Material bearbeitet werden, wobei das feuerfeste Material eine Mischung aus wenigstens einem Metall und aus wenigstens einer Keramik enthält, **dadurch gekennzeichnet, dass** die Schicht eine Dicke von wenigstens einem 1 mm aufweist.

10. Bewegliches Teil nach Anspruch 9, **dadurch gekennzeichnet, dass** das Metall aus Eisen, Kobalt und Nickel ausgewählt ist.

11. Bewegliches Teil nach Anspruch 9 oder 10, **dadurch gekennzeichnet, dass** die Keramik aus feuerfesten Oxiden, Karbiden, Nitriden und Boriden ausgewählt ist.

12. Bewegliches Teil nach Anspruch 11, **dadurch gekennzeichnet, dass** das feuerfeste Material Aluminiumoxid enthält.

## Claims

1. A method of making labyrinth seal lips on the periphery of a metal moving part for a turbomachine, in which method, prior to assembly of the moving part, a layer of refractory material that adheres to the metal material is formed on the moving part, said refractory material containing a mixture of at least one metal and at least one ceramic, and labyrinth seal lips are machined to their final dimensions in the thick layer of refractory material, the method being **characterised in that** the thickness of the layer is at least 1 mm.

2. A method according to claim 1, **characterised in that** the refractory material of the layer comprises at least one metal selected from iron, cobalt, and nickel, together with at least one ceramic.

3. A method according to claim 2, **characterised in that** the ceramic is selected from borides, nitrides, carbides, and refractory oxides.

4. A method according to claim 3, **characterised in that** the refractory material includes alumina.

5. A method according to any one of claims 1 to 4, **characterised in that** the refractory material of the layer is in the form of an agglomerated powder or of a mixture of agglomerated powders.

6. A method according to any one of claims 1 to 5, **characterised in that** the layer of refractory material is deposited by thermal sputtering.

7. A method according to claim 6, **characterised in that** the layer of refractory material is formed by plasma deposition.

8. A method according to any one of claims 1 to 5, **characterised in that** the layer of refractory material is formed by brazing onto the metal material.

9. A moving part forming a metal turbomachine rotor presenting labyrinth seal lips at its periphery, the lips being machined in the thickness of a layer of refractory material adhering to the metal material, said refractory material containing a mixture of at least one metal and at least one ceramic, **characterised in that** the thickness of the layer is at least 1 mm.

10. A moving part according to claim 9, **characterised in that** the metal is selected from iron, cobalt, and nickel.

11. A moving part according to claim 9 or 10, **characterised in that** the ceramic is selected from borides, nitrides, carbides, and refractory oxides.

12. A moving part according to claim 11, **characterised in that** the refractory material includes alumina.
